# EUROPÄISCHE PATENTSCHRIFT

(11) **EP 4 402 396 B1**
(45) Veröffentlichungstag und Bekanntmachung des Hinweises auf die Patenterteilung: **01.10.2025**
(21) Anmeldenummer: 22760715.7
(22) Anmeldetag: 02.08.2022
(51) Int. Cl.: F16J 15/34

(54) **GLEITRINGDICHTUNGSANORDNUNG MIT VERBESSERTER AXIALKRAFTABSTÜTZUNG**
MECHANICAL END-FACE SEAL ASSEMBLY WITH IMPROVED AXIAL FORCE SUPPORT
ENSEMBLE GARNITURE MÉCANIQUE D'ÉTANCHÉITÉ PRÉSENTANT UN SUPPORT DE FORCE AXIALE AMÉLIORÉ

(30) Priorität: 17.09.2021 DE 102021124115
(43) Veröffentlichungstag der Anmeldung: 24.07.2024
(73) Patentinhaber: EagleBurgmann Germany GmbH & Co. KG, 82515 Wolfratshausen (DE)
(72) Erfinder: FESL, Andreas, 83624 Otterfing (DE); RANKL, Stephan, 82205 Gilching (DE); BAUER, Florian, 83646 Wackersberg (DE)
(74) Vertreter: Hoefer & Partner Patentanwälte mbB
(86) Internationale Anmeldenummer: PCT/EP2022/071652
(87) Internationale Veröffentlichungsnummer: WO 2023/041242

(56) Entgegenhaltungen:
- EP-A1- 3 450 805
- WO-A1-2011/009596
- US-A- 4 997 191

## Beschreibung

Die vorliegende Erfindung betrifft eine Gleitringdichtungsanordnung zur Abdichtung zwischen einem Hochdruckbereich und einem Niederdruckbereich an einer Welle mit einer verbesserten Abstützung von axialen Kräften, welche im Betrieb der Gleitringdichtungsanordnung auf diese wirken können.

Gleitringdichtungsanordnungen sind aus dem Stand der Technik in unterschiedlichen Ausgestaltungen bekannt. Insbesondere bei Gasdichtungen können bei Hochdruckanwendungen mit Drücken über 200 x 10⁵ Pa sehr hohe Axialkräfte auf die Bauteile der Gleitringdichtungsanordnung wirken. Zur Aufnahme dieser hohen Kräfte ist es bekannt, einen sogenannten geteilten Ring, welcher aus mehreren Umfangssegmenten zusammengesetzt ist, zu verwenden, um die Axialkraft auf eine Welle oder dergleichen zu übertragen. Durch Verformungen an diesem geteilten Ring können Umfangswelligkeiten entstehen, welche sich in extremen Fällen aufgrund elastischer Verformung bis zu den Gleitflächen der Gleitringe durchdrücken können. Welligkeiten an den Gleitflächen sind jedoch unbedingt zu vermeiden, um eine Leistungsfähigkeit der Gleitringdichtung nicht unnötig einzuschränken. Zur Reduzierung der möglicherweise vom geteilten Ring auf die Gleitflächen übertragenen Welligkeiten werden im Stand der Technik elastische Nebendichtelemente zwischen dem geteilten Ring und der Gleitringdichtung eingesetzt. Diese können bei Auftreten von Axialkräften elastisch verformt werden und reduzieren somit die Gefahr der Übertragung der unerwünschten Welligkeiten an die Gleitflächen der Gleitringdichtung. Bei Hochdruckanwendungen und auch bei Abdichtungsaufgaben, bei denen das abzudichtende Medium hohe Temperaturen aufweist, sind elastische Nebendichtelemente nicht oder nur bedingt einsetzbar.

Die EP 3 450 805 A1 zeigt eine Gleitringdichtungsanordnung, gemäß der Präambel von Anspruch 1, mit einer Gleitringdichtung und einem Gleitringträger, welcher den rotierenden Gleitring mit einem rotierenden Bauteil drehfest verbindet. Der Gleitringträger ist dabei mehrteilig ausgebildet und mittels Schrauben verbunden. Zur Abdichtung sind flexible Packungen am mehrteiligen Gleitringträger vorgesehen. Eine Kraftabstützung einer auf die Gleitringdichtungsanordnung wirkenden Axialkraft erfolgt mittels Verschraubung der Hülse an einer Welle. Ferner zeigt die US 4 997 191 A eine Gleitringdichtungsanordnung mit einem geschlitzten Ring mit einem Radialschlitz.

Es ist daher Aufgabe der vorliegenden Erfindung, eine Gleitringdichtungsanordnung bereitzustellen, welche bei einfachem Aufbau und einfacher, kostengünstiger Herstellbarkeit eine Übertragung von Welligkeiten eines geteilten Rings auf die Gleitflächen der Gleitringdichtungsanordnung verhindern kann und insbesondere auch für Hochdruckanwendungen und Hochtemperaturanwendungen geeignet ist.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass Axialkräfte, welche auf die Gleitringdichtungsanordnung wirken, deutlich besser aufgenommen und auf ein rotierendes Bauteil übertragen werden können. Insbesondere kann verhindert werden, dass Welligkeiten bei Auftreten von Axialkräften den Gleitflächen der Gleitringdichtungsanordnung aufgeprägt werden. Dies wird erfindungsgemäß dadurch erreicht, dass die Gleitringdichtungsanordnung zur Abdichtung zwischen einem Hochdruckbereich und einem Niederdruckbereich an einer Welle oder dergleichen eine Gleitringdichtung aufweist, welche einen rotierenden Gleitring mit einer ersten Gleitfläche und einen stationären Gleitring mit einer zweiten Gleitfläche aufweist, wobei zwischen den Gleitflächen der Gleitringe ein Dichtspalt definiert ist. Ferner ist ein Gleitringträger für den rotierenden Gleitring vorgesehen, welcher für eine drehfeste Verbindung mit dem rotierenden Bauteil, insbesondere einer Welle, eingerichtet ist. Der Gleitringträger weist dabei einen Hülsenbereich auf. Ferner umfasst die Gleitringdichtungsanordnung eine Kraftabstützanordnung, welche eingerichtet ist, um eine auf die Gleitringdichtungsanordnung wirkende Axialkraft abzustützen. Die Kraftabstützanordnung ist dabei an einer Stirnseite des Hülsenbereichs des Gleitringträgers angeordnet. Die Kraftabstützanordnung umfasst dabei eine Spannhülse, eine Kegelhülse und einen geteilten Ring mit wenigstens zwei Segmenten. Der geteilte Ring ist dabei in Radialrichtung der Gleitringdichtungsanordnung in mehrere Umfangssegmente unterteilt, welche im montierten Zustand an einem rotierenden Bauteil miteinander verbunden sind. Weiterhin ist zwischen der Spannhülse und der Kegelhülse eine Kegelverbindung ausgebildet. Die Spannhülse liegt an der Stirnseite des Hülsenbereichs des Gleitringträgers an und die Kegelhülse liegt an einer Seitenfläche des geteilten Rings an.

Somit erfolgt bei Auftreten einer Axialkraft, welche auf die Gleitringdichtungsanordnung wirkt, eine Kraftübertragung vom Gleitringträger auf die Spannhülse, von der Spannhülse auf die Kegelhülse, von der Kegelhülse auf den geteilten Ring, und vom geteilten Ring auf das rotierende Bauteil. Somit wird die Axialkraft über vier Verbindungsflächen, nämlich einer ersten Verbindungsfläche zwischen dem Hülsenbereich und der Spannhülse, einer zweiten Verbindungsfläche an der Kegelverbindung zwischen der Spannhülse und der Kegelhülse, einer dritten Verbindungsfläche zwischen der Kegelhülse und dem geteilten Ring und einer vierten Verbindungsfläche zwischen dem geteilten Ring und dem rotierenden Bauteil übertragen.

Ein besonderer Vorteil liegt bei der erfindungsgemäßen Ausgestaltung darin, dass durch Verwendung der Kegelverbindung zwischen der Spannhülse und der Kegelhülse ein Kraftanteil der Axialkraft in Radialrichtung über einen Innenumfang der Kegelhülse direkt auf das rotierende Bauteil übertragen werden kann. Dadurch ist die dann an der vierten Verbindungsfläche letztendlich verbleibende Axialkraft zur Übertragung auf das rotierende Bauteil deutlich reduziert. Dadurch kann verhindert werden, dass sich die Trennstellen des geteilten Rings auf die Gleitflächen der Gleitringdichtungsanordnung abdrücken.

Um einen möglichst kompakten Aufbau zu erreichen und eine sichere Kraftübertragung von der Spannhülse auf die Kegelhülse sicherzustellen, weist die Spannhülse vorzugsweise einen Aufnahmeraum zur Aufnahme der Kegelhülse auf. Die Kegelhülse kann dabei bevorzugt zu großen Teilen, insbesondere mehr als 80 % ihrer Erstreckung in Axialrichtung, im Aufnahmeraum der Spannhülse angeordnet sein.

Vorzugsweise weist der Aufnahmeraum der Spannhülse eine erste innenseitige Kegelfläche auf und die Kegelhülse weist eine zweite außenseitige Kegelfläche auf. Die beiden Kegelflächen bilden dabei die Kegelverbindung zwischen der Spannhülse und der Kegelhülse.

Die Kegelverbindung ist vorzugsweise in einem Winkel α von 35° ± 8°, insb. 35° ± 3°, zu einer Mittelachse X-X der Gleitringdichtung angeordnet. In Abhängigkeit der Wahl des Winkels α < 45° kann eine größere Kraft einer radialen Krafteinleitung über die Kegelhülse in das rotierende Bauteil erreicht werden, als eine axiale Krafteinleitung in Richtung des geteilten Ringes.

Besonders bevorzugt ist ein mittlerer Durchmesser des geteilten Rings größer als ein Innendurchmesser der Kegelhülse. Hierdurch ergibt sich eine günstige Krafteinleitung von der Kegelhülse auf den geteilten Ring. Insbesondere ist in diesem Kontaktbereich des geteilten Rings eine Eigenverformung des geteilten Rings reduziert.

Besonders bevorzugt sind die Spannhülse, der geteilte Ring, der Gleitringträger und die Kegelhülse aus Metallmaterial, insbesondere aus dem gleichen Metallmaterial, hergestellt. Als Metallmaterial wird vorzugsweise Stahl verwendet. Hierdurch kann die Gleitringdichtungsanordnung insbesondere bei Hochtemperaturanwendungen, bei denen die Verwendung elastischer Dichtelemente aufgrund der durch die hohen Temperaturen auftretenden Zerstörungen von elastischen Dichtelementen nicht möglich ist, verwendet werden, als auch bei Hochdruckanwendungen, bei denen bei der Verwendung von geteilten Ringen eine hohe Wahrscheinlichkeit vorhanden ist, dass sich Welligkeiten auf die Gleitflächen der Gleitringe aufprägen. Bei Verwendung unterschiedlicher Materialien für die Spannhülse, den geteilten Ring, den Gleitringträger und die Kegelhülse weisen die unterschiedlichen Materialien vorzugsweise einen gleichen oder sehr ähnlichen (± 10 %) Wärmeausdehnungskoeffizienten auf.

Besonders bevorzugt ist der geteilte Ring in einer Nut in dem rotierenden Bauteil, insbesondere in einer Nut in einer Welle, angeordnet.

Weiter bevorzugt ist ein Axialspalt am inneren Umfangsbereich zwischen der Spannhülse und der Kegelhülse vorgesehen. Dadurch erhält die Kraftabstützanordnung zumindest gewisse dämpfende Eigenschaften bei einer Einleitung einer Axialkraft. Die Axialkraft kann somit sicher über den Krafteinleitungsweg vom Hülsenbereich des Gleitringträgers in das rotierende Bauteil übertragen werden.

Um die Übertragung der Axialkraft weiter zu verbessern, ist vorzugsweise zwischen dem Hülsenbereich des Gleitringträgers und der Spannhülse eine Schraubverbindung ausgebildet. Die Schraubverbindung umfasst dabei bevorzugt eine Vielzahl von entlang des Umfangs angeordneter Schraubbolzen, welche durch die Spannhülse hindurchgeführt sind und in die Stirnseite des Hülsenbereichs eingeschraubt sind.

Weiter bevorzugt ist die Gleitringdichtungsanordnung eine Gasdichtung zur Abdichtung eines gasförmigen Mediums. Das gasförmige Medium steht besonders bevorzugt unter einem hohen Druck, vorzugsweise größer als 200 x 10⁵ Pa und einer hohen Temperatur, insbesondere größer als 400 °C.

Nachfolgend wird unter Bezugnahme auf die begleitende Zeichnung ein Ausführungsbeispiel der Erfindung im Detail beschrieben. In der Zeichnung ist:
- Fig. 1: eine schematische Schnittansicht einer Gleitringdichtungsanordnung gemäß einem bevorzugten Ausführungsbeispiel der Erfindung,
- Fig. 2: eine schematische Schnittansicht entlang der Linie II-II von Fig. 1,
- Fig. 3: eine schematische, vergrößerte Teilschnittansicht der Gleitringdichtungsanordnung von Fig. 1,
- Fig. 4: eine schematische Schnittansicht einer Spannhülse der Gleitringdichtungsanordnung von Fig. 1 und
- Fig. 5: eine schematische Schnittansicht einer Kegelhülse der Gleitringdichtungsanordnung von Fig. 1.

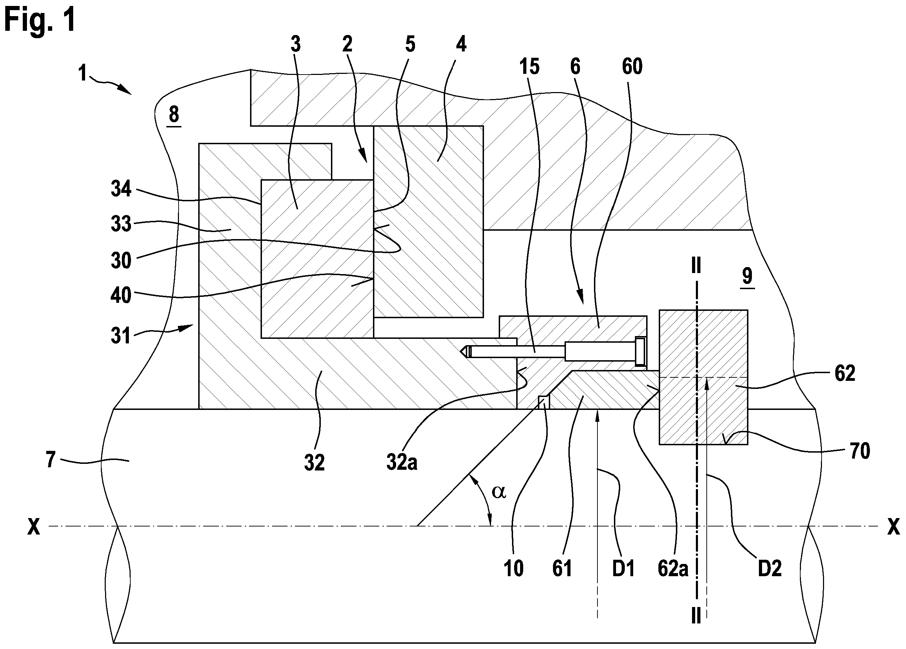

Nachfolgend wird unter Bezugnahme auf die Fig. 1 bis 5 eine Gleitringdichtungsanordnung 1 gemäß einem bevorzugten Ausführungsbeispiel der Erfindung im Detail beschrieben.

Wie aus Fig. 1 ersichtlich ist, umfasst die Gleitringdichtungsanordnung 1 eine Gleitringdichtung 2 mit einem rotierenden Gleitring 3 und einem stationären Gleitring 4. Der rotierende Gleitring 3 weist eine erste Gleitfläche 30 auf und der stationäre Gleitring 4 weist eine zweite Gleitfläche 40 auf. Ein Dichtspalt 5 ist zwischen den beiden Gleitflächen 30, 40 der Gleitringe 3, 4 definiert.

Wie weiter aus Fig. 1 ersichtlich ist, dichtet die Gleitringdichtungsanordnung 1 an einer Welle 7 einen Hochdruckbereich 8 von einem Niederdruckbereich 9 ab. Im Hochdruckbereich 8 ist vorzugsweise ein unter hohem Druck, insbesondere größer als 200 x 10⁵ Pa, stehendes Gas als abzudichtendes Medium vorhanden.

Der rotierende Gleitring 3 ist mittels eines Gleitringträgers 31 drehfest mit der Welle 7 verbunden. Der Gleitringträger 31 umfasst dabei einen auf der Welle 7 angeordneten Hülsenbereich 32 sowie einen Haltebereich 33, welcher den rotieren Gleitring 3 teilweise umschließt. Somit erfolgt bei sich drehender Welle 7 eine Kraftübertragung von der Welle 7 auf den Gleitringträger 31 und von diesem auf den rotierenden Gleitring 3.

Weiter bevorzugt ist zwischen dem Gleitringträger 31 und dem rotierenden Gleitring 3 eine metallische Abdichtung 34 ohne elastische Nebendichtung ausgebildet. Dadurch muss zwischen dem Gleitringträger 31 und dem rotierenden Gleitring 3 kein elastisches Nebendichtelement zur Abdichtung des Spaltes zwischen diesen beiden Bauteilen vorgesehen sein, so dass sowohl eine Hochdruckanwendung als auch eine Hochtemperaturanwendung problemlos möglich ist.

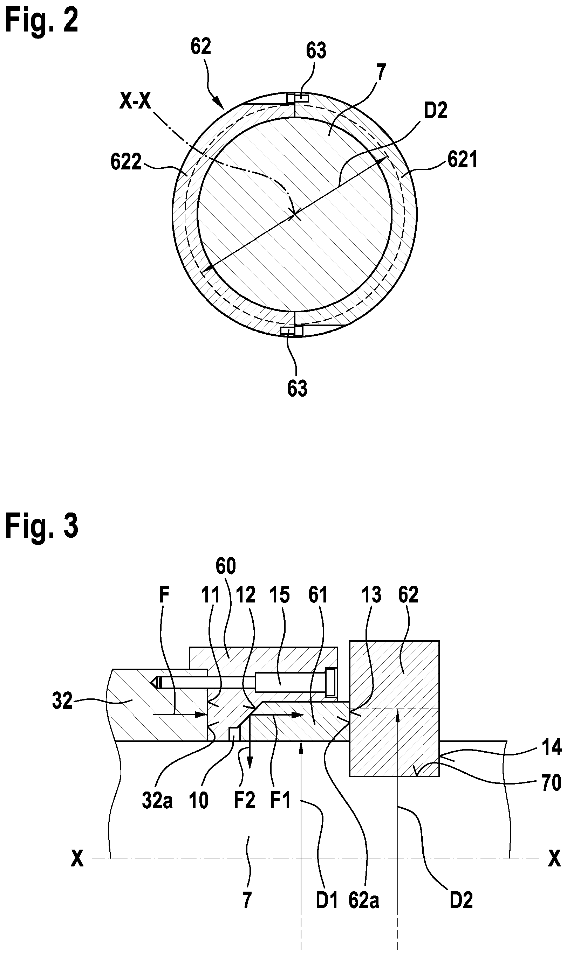

Die Gleitringdichtungsanordnung 1 umfasst ferner eine Kraftabstützanordnung 6. Die Kraftabstützanordnung 6 ist im Detail aus Fig. 3 ersichtlich. Die Kraftabstützanordnung 6 umfasst dabei eine Spannhülse 60, eine Kegelhülse 61 und einen geteilten Ring 62.

Der geteilte Ring 62 ist ein in zwei Umfangssegmente unterteilter Ring, wobei in diesem Ausführungsbeispiel der geteilte Ring 62 ein erstes Segment 621 und ein zweites Segment 622 aufweist. Die beiden Segmente sind über Schraubverbindungen 63 miteinander verbunden (vgl. Fig. 2). Alternativ werden die geteilten Ringe mittels einer übergeschobenen Hülse gehalten.

Der geteilte Ring 62 ist dabei in einer Nut 70 in der Welle 7 angeordnet.

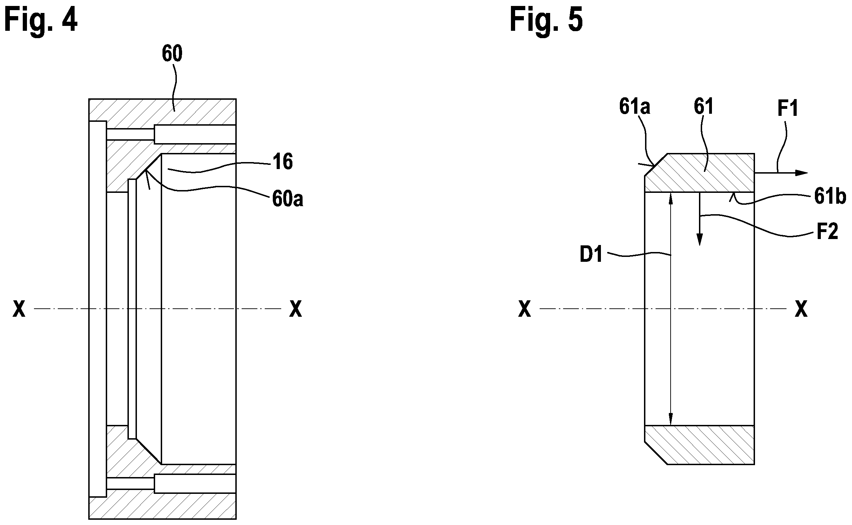

Die Spannhülse 60 ist im Detail aus Fig. 4 ersichtlich. Die Spannhülse 60 umfasst insbesondere eine erste Kegelfläche 60a und einen Aufnahmeraum 16. Der Aufnahmeraum 16 ist, wie auch die erste Kegelfläche 60a, an einer radialen Innenseite, d.h. einer zur Welle 7 gerichteten Seite der Spannhülse 60, ausgebildet. Der Aufnahmeraum 16 dient dabei zur Aufnahme der Kegelhülse 61, wie aus den Fig. 1 und 3 ersichtlich ist.

Die Kegelhülse 61 ist im Detail aus Fig. 5 ersichtlich. Die Kegelhülse 61 weist dabei eine zweite Kegelfläche 61a auf. Weiterhin weist die Kegelhülse 61 einen Innenumfang 61b auf, mit welchem die Kegelhülse 61 auf der Welle 7 angeordnet ist.

Die Kraftabstützanordnung 6 ist dabei eingerichtet, eine auf die Gleitringdichtungsanordnung 1 wirkende Axialkraft F abzustützen. Derartige Axialkräfte F können im Betrieb der Gleitringdichtungsanordnung insbesondere in Abhängigkeit einer Last an einer abzudichtenden Maschine, und insbesondere bei Laständerungen auftreten.

Wie aus den Fig. 1 und 3 weiter ersichtlich ist, ist zwischen der Spannhülse 60 und der Kegelhülse 61 eine Kegelverbindung ausgebildet, welche durch die erste Kegelfläche 60a der Spannhülse 60 und die zweite Kegelfläche 61a der Kegelhülse 61 bereitgestellt wird. Dabei ist die Kegelhülse 61 im Aufnahmeraum 16 der Spannhülse 60 aufgenommen.

Wie weiter aus den Fig. 1 und 3 ersichtlich ist, liegt die Spannhülse 60 im montierten Zustand an einer Stirnseite 32a des Hülsenbereichs 32 des Gleitringträgers 31 an. Weiterhin liegt die Kegelhülse 61 an einer Seitenfläche 62a des geteilten Rings 62 an.

Weiterhin weist die Kegelhülse 61 einen Innendurchmesser D1 auf, welcher kleiner ist als ein mittlerer Durchmesser D2 des geteilten Rings 62 (vgl. Fig. 1). Dadurch wird eine Krafteinleitung in einen radial inneren Bereich des geteilten Rings 62 sichergestellt, wodurch dann die Übertragung der Axialkraft vom geteilten Ring 62 auf die Welle 7 ohne große Hebelwirkung erreicht wird.

Die Kegelverbindung zwischen der Spannhülse 60 und der Kegelhülse 61 weist dabei einen Winkel α zu einer Mittelachse X-X der Gleitringdichtungsanordnung 1 auf (vgl. Fig. 1). Der Winkel α ist vorzugsweise in einem Bereich von 35° ± 3° ausgebildet.

Die Spannhülse 60 ist mittels eines Bolzens 15 mit dem Hülsenbereich 32 des Gleitringträges 31 verbunden. Hierbei sind vorzugsweise mehrere Bolzen 15 entlang der Umfangsrichtung der Spannhülse in gleichem Abstand zueinander angeordnet.

Der Gleitringträger 31, die Spannhülse 60, die Kegelhülse 61 und der geteilte Ring 62 sind dabei alle aus einem Stahlmaterial, vorzugsweise aus dem gleichen Stahlmaterial, hergestellt. Dadurch wird sichergestellt, dass die Gleitringdichtungsanordnung 1 für Hochdruckanwendungen sowie auch für Hochtemperaturanwendungen einsetzbar ist.

Wie weiter aus Fig. 3 ersichtlich ist, sind somit zwischen dem Gleitringträger 31 und der Welle 7 vier Verbindungsflächen zur Übertragung der Axialkraft F vorgesehen. Eine erste Verbindungsfläche 11 ist zwischen dem Hülsenbereich 32 und der Spannhülse 60 ausgebildet. Eine zweite Verbindungsfläche 12, welche die Kegelverbindung herstellt, ist zwischen der Spannhülse 60 und der Kegelhülse 61 ausgebildet. Eine dritte Verbindungsfläche 13 ist zwischen der Kegelhülse 61 und einer Seitenfläche 62a des geteilten Rings 62 ausgebildet. Eine vierte Verbindungsfläche 14 ist zwischen dem geteilten Ring 62 und der Welle 7 im Bereich der Nut 70 ausgebildet (vgl. Fig. 3).

Wenn somit im Betrieb der Gleitringdichtungsanordnung 1 eine Axialkraft F auf die Gleitringdichtungsanordnung 1 wirkt, wird diese über den Gleitringträger 31 auf die Kraftabstützanordnung 6, die an der Welle 7 angeordnet ist, übertragen. Durch das Vorsehen der kegelförmigen zweiten Verbindungsfläche 12 zwischen der Spannhülse 60 und der Kegelhülse 61 wird die Kraft F somit in einen axialen Anteil F1 und einen radialen Anteil F2 aufgeteilt. Der radiale Anteil F2 wird dann über den Innenumfang 61b der Kegelhülse 61 direkt auf die Welle 7 übertragen. Somit ist die restliche zu übertragende Kraft, die von der Kegelhülse 61 auf den geteilten Ring 62 und von diesem über die Nut 70 auf die Welle 7 übertragen werden muss, deutlich reduziert.

Somit können insbesondere lastinduzierte Welligkeiten, welche aufgrund einer Verformung des geteilten Rings 62 bei Auftreten der Axialkraft F auftreten können, in einem solchen Maße reduziert werden, dass sich diese Welligkeiten nicht auf die Gleitflächen 30, 40 der Gleitringe aufprägen.

Weiterhin ist ein Axialspalt 10 zwischen der Spannhülse 60 und der Kegelhülse 61 vorhanden (vgl. Fig. 3). Der Axialspalt 10 stellt dabei eine gewisse dämpfende Wirkung bei Auftreten von Axialkräften F bereit, was eine gewisse Eigenverformung der Bauteile der Kraftabstützanordnung 6 ermöglicht.

Da eine Verformung des Stahls, welcher als Material für den Gleitringträger 31, die Spannhülse 60, die Kegelhülse 61 und den geteilten Ring 62 verwendet wird, relativ gering ist, kann auch eine verbesserte Auslegung von Bauteilen der Gleitringdichtungsanordnung 1 realisiert werden.

Insbesondere kann durch Wahl des Winkels α der Kegelverbindung zwischen Spannhülse 60 und Kegelhülse 61 eine maximale Größe einer Einleitung von Welligkeiten, die durch den geteilten Ring 62 bedingt sind, auf die Gleitflächen 30, 40 erreicht werden.

### Bezugszeichenliste

- 1: Gleitringdichtungsanordnung
- 2: Gleitringdichtung
- 3: rotierender Gleitring
- 4: stationärer Gleitringdichtung
- 5: Dichtspalt
- 6: Kraftabstützanordnung
- 7: Welle / rotierendes Bauteil
- 8: Hochdruckbereich
- 9: Niederdruckbereich
- 10: Axialspalt
- 11: erste Verbindungsfläche
- 12: zweite Verbindungsfläche
- 13: dritte Verbindungsfläche
- 14: vierte Verbindungsfläche
- 15: Bolzen
- 16: Aufnahmeraum
- 30: erste Gleitfläche
- 31: Gleitringträger
- 32: Hülsenbereich
- 32a: Stirnseite des Hülsenbereichs
- 33: Haltebereich
- 34: metallische Abdichtung
- 40: zweite Gleitfläche
- 60: Spannhülse
- 60a: erste Kegelfläche
- 61: Kegelhülse
- 61a: zweite Kegelfläche
- 61b: Innenumfang
- 62: geteilter Ring
- 62a: Seitenfläche des geteilten Rings
- 63: Schraubverbindung
- 621: erstes Segment
- 622: zweites Segment
- 70: Nut
- D1: Innendurchmesser der Kegelhülse
- D2: mittlerer Durchmesser des geteilten Rings
- F: Axialkraft
- F1: axialer Kraftanteil der Axialkraft
- F2: radialer Kraftanteil der Axialkraft
- X-X: Mittelachse
- α: Winkel

## Patentansprüche

1. Gleitringdichtungsanordnung (1) zur Abdichtung zwischen einem Hochdruckbereich (8) und einem Niederdruckbereich (9) an einem rotierenden Bauteil (7), umfassend
• eine Gleitringdichtung (2) mit einem rotierenden Gleitring (3) mit einer ersten Gleitfläche (30) und einem stationären Gleitring (4) mit einer zweiten Gleitfläche (40), wobei zwischen den Gleitflächen (30, 40) ein Dichtspalt (5) definiert ist,
• einen Gleitringträger (31) für den rotierenden Gleitring (3), welcher eingerichtet ist, den rotierenden Gleitring (3) mit dem rotierenden Bauteil (7) drehfest zu verbinden, wobei der Gleitringträger (31) einen Hülsenbereich (32) aufweist, und
• eine Kraftabstützanordnung (6), welche zur Abstützung einer auf die Gleitringdichtungsanordnung (1) wirkenden Axialkraft (F) eingerichtet ist,
• wobei die Kraftabstützanordnung (6) an einer Stirnseite (32a) des Hülsenbereichs (32) des Gleitringträgers (31) angeordnet ist,
- wobei die Spannhülse (60) an der Stirnseite (32a) des Hülsenbereichs (32) anliegt und die Kegelhülse (61) an einer Seitenfläche (62a) des geteilten Rings (62) anliegt,
• **dadurch gekennzeichnet, dass** die Kraftabstützanordnung (6) eine Spannhülse (60), eine Kegelhülse (61) und einen geteilten Ring (62) mit wenigstens zwei Segmenten (621, 622) aufweist,
• wobei zwischen der Spannhülse (60) und der Kegelhülse (61) eine Kegelverbindung mit einer ersten Kegelfläche (60a) an der Spannhülse (60) und einer zweiten Kegelfläche (61a) an der Kegelhülse (61) ausgebildet ist.

2. Gleitringdichtungsanordnung (1) nach Anspruch 1, wobei die Spannhülse (60) einen Aufnahmeraum (16) zur Aufnahme der Kegelhülse (61) aufweist.

3. Gleitringdichtungsanordnung (1) nach Anspruch 2, wobei der Aufnahmeraum (16) der Spannhülse (60) eine erste innenseitige Kegelfläche (60a) aufweist und die Kegelhülse (61) eine zweite außenseitige Kegelfläche (61a) aufweist.

4. Gleitringdichtungsanordnung (1) nach einem der vorhergehenden Ansprüche, wobei die Kegelverbindung einen Winkel (α) von 35° ± 8° zu einer Mittelachse (X-X) der Gleitringdichtungsanordnung (1) aufweist.

5. Gleitringdichtungsanordnung (1) nach einem der vorhergehenden Ansprüche, wobei ein mittlerer Durchmesser (D2) des geteilten Rings (62) größer ist als ein Innendurchmesser (D1) der Kegelhülse (61).

6. Gleitringdichtungsanordnung (1) nach einem der vorhergehenden Ansprüche, wobei der Gleitringträger (31), die Spannhülse (60), die Kegelhülse (61) und der geteilte Ring (62) aus Metallmaterial hergestellt sind.

7. Gleitringdichtungsanordnung nach einem der vorhergehenden Ansprüche, wobei der geteilte Ring (62) zur Aufnahme in einer Nut (70) des rotierenden Bauteils (7) ausgebildet ist.

8. Gleitringdichtungsanordnung (1) nach einem der vorhergehenden Ansprüche, wobei ein Axialspalt (10) am inneren Umfangsbereich zwischen der Spannhülse (60) und der Kegelhülse (61) ausgebildet ist.

9. Gleitringdichtungsanordnung (1) nach einem der vorhergehenden Ansprüche, wobei zwischen der Spannhülse (60) und dem Gleitringträger (31) eine Schraubverbindung ausgebildet ist.

10. Gleitringdichtungsanordnung (1) nach einem der vorhergehenden Ansprüche, wobei zwischen dem Gleitringträger (31) und dem rotierenden Gleitring (3) eine metallische Abdichtung (34) ohne elastische Nebendichtelemente ausgebildet ist.

## Claims

1. Mechanical seal assembly (1) for sealing between a high-pressure region (8) and a low-pressure region (9) on a rotating component (7), comprising
• a mechanical seal (2) with a rotating slide ring (3) with a first slide surface (30) and a stationary slide ring (4) with a second slide surface (40), wherein a sealing gap (5) is defined between the slide surfaces (30, 40),
• a slide ring carrier (31) for the rotating slide ring (3), which is configured to connect the rotating slide ring (3) to the rotating component (7) in a rotationally fixed manner, wherein the slide ring carrier (31) comprises a sleeve region (32), and
• a force support arrangement (6) which is configured to support an axial force (F) acting on the mechanical seal assembly (1),
• wherein the force support arrangement (6) is arranged on an end face (32a) of the sleeve region (32) of the slide ring carrier (31),
• wherein the clamping sleeve (60) bears against the end face (32a) of the sleeve region (32) and the conical sleeve (61) bears against a side surface (62a) of the split ring (62),
• **characterized in that** the force support arrangement (6) comprises a clamping sleeve (60), a conical sleeve (61) and a split ring (62) with at least two segments (621, 622),
• wherein a conical connection with a first conical surface (60a) on the clamping sleeve (60) and a second conical surface (61a) on the conical sleeve (61) is formed between the clamping sleeve (60) and the conical sleeve (61).

2. Mechanical seal assembly (1) according to claim 1, wherein the clamping sleeve (60) comprises a receiving space (16) for receiving the conical sleeve (61).

3. Mechanical seal assembly (1) according to claim 2, wherein the receiving space (16) of the clamping sleeve (60) comprises a first inner-side conical surface (60a) and the conical sleeve (61) comprises a second outer-side conical surface (61a).

4. Mechanical seal assembly (1) according to any one of the preceding claims, wherein the conical connection has an angle (α) of 35° ± 8° to a central axis (X-X) of the mechanical seal assembly (1).

5. Mechanical seal assembly (1) according to any one of the preceding claims, wherein an average diameter (D2) of the split ring (62) is larger than an inner diameter (D1) of the conical sleeve (61).

6. Mechanical seal assembly (1) according to any one of the preceding claims, wherein the slide ring carrier (31), the clamping sleeve (60), the conical sleeve (61) and the split ring (62) are made of metal material.

7. Mechanical seal assembly according to any one of the preceding claims, wherein the split ring (62) is configured to be received in a groove (70) of the rotating component (7).

8. Mechanical seal assembly (1) according to any one of the preceding claims, wherein an axial gap (10) is formed on the inner circumferential region between the clamping sleeve (60) and the conical sleeve (61).

9. Mechanical seal assembly (1) according to any one of the preceding claims, wherein a screw connection is formed between the clamping sleeve (60) and the slide ring carrier (31).

10. Mechanical seal assembly (1) according to any one of the preceding claims, wherein a metallic seal (34) without elastic secondary sealing elements is formed between the slide ring carrier (31) and the rotating slide ring (3).

## Revendications

1. Ensemble à garniture mécanique d'étanchéité (1) destiné à assurer l'étanchéité entre une zone haute pression (8) et une zone basse pression (9) sur un composant rotatif (7), comprenant
• une garniture mécanique d'étanchéité (2) avec un anneau de glissement rotatif (3) avec une première surface de glissement (30) et un anneau de glissement stationnaire (4) avec une deuxième surface de glissement (40), dans lequel un interstice d'étanchéité (5) est défini entre les surfaces de glissement (30, 40),
• un support d'anneau de glissement (31) pour l'anneau de glissement rotatif (3), qui est mis au point pour relier de manière solidaire en rotation l'anneau de glissement rotatif (3) au composant rotatif (7), dans lequel le support d'anneau de glissement (31) présente une zone de manchon (32), et
• un ensemble de support de force (6) qui est mis au point pour supporter une force axiale (F) agissant sur l'ensemble à garniture mécanique d'étanchéité (1),
• dans lequel l'ensemble de support de force (6) est disposé sur une face frontale (32a) de la zone de manchon (32) du support d'anneau de glissement (31),
• dans lequel le manchon de serrage (60) repose sur la face frontale (32a) de la zone de manchon (32) et le manchon conique (61) repose sur une surface latérale (62a) de l'anneau divisé (62),
• **caractérisé en ce que** l'ensemble de support de force (6) présente un manchon de serrage (60), un manchon conique (61) et un anneau divisé (62) avec au moins deux segments (621, 622),
• dans lequel une liaison conique avec une première surface conique (60a) sur le manchon de serrage (60) et une deuxième surface conique (61a) sur le manchon conique (61) est réalisée entre le manchon de serrage (60) et le manchon conique (61).

2. Ensemble à garniture mécanique d'étanchéité (1) selon la revendication 1, dans lequel le manchon de serrage (60) présente un espace de réception (16) pour recevoir le manchon conique (61).

3. Ensemble à garniture mécanique étanchéité (1) selon la revendication 2, dans lequel l'espace de réception (16) du manchon de serrage (60) présente une première surface conique intérieure (60a) et le manchon conique (61) présente une deuxième surface conique côté extérieur (61a).

4. Ensemble à garniture mécanique d'étanchéité (1) selon l'une quelconque des revendications précédentes, dans lequel la liaison conique présente un angle (α) de 35° ± 8° par rapport à un axe central (X-X) de l'ensemble à garniture mécanique d'étanchéité (1).

5. Ensemble à garniture mécanique d'étanchéité (1) selon l'une quelconque des revendications précédentes, dans lequel un diamètre moyen (D2) de l'anneau divisé (62) est supérieur à un diamètre intérieur (D1) du manchon conique (61).

6. Ensemble à garniture mécanique d'étanchéité (1) selon l'une quelconque des revendications précédentes, dans lequel le support d'anneau de glissement (31), le manchon de serrage (60), le manchon conique (61) et l'anneau divisé (62) sont fabriqués à partir d'un matériau métallique.

7. Ensemble à garniture mécanique d'étanchéité selon l'une quelconque des revendications précédentes, dans lequel l'anneau divisé (62) est réalisé pour être logé dans une rainure (70) du composant rotatif (7).

8. Ensemble à garniture mécanique d'étanchéité (1) selon l'une quelconque des revendications précédentes, dans lequel une fente axiale (10) est réalisée sur la zone périphérique intérieure entre le manchon de serrage (60) et le manchon conique (61).

9. Ensemble à garniture mécanique d'étanchéité (1) selon l'une quelconque des revendications précédentes, dans lequel une liaison vissée est réalisée entre le manchon de serrage (60) et le support d'anneau de glissement (31).

10. Ensemble à garniture mécanique d'étanchéité (1) selon l'une quelconque des revendications précédentes, dans lequel une étanchéité métallique (34) sans éléments d'étanchéité secondaires élastiques est réalisée entre le support d'anneau de glissement (31) et l'anneau de glissement rotatif (3).
